# EUROPEAN PATENT SPECIFICATION

(11) **EP 4 524 556 B1**
(45) Date of publication and mention of the grant of the patent: **03.06.2026**
(21) Application number: 24764070.9
(22) Date of filing: 10.01.2024
(51) Int. Cl.: G01N 23/2202, G01N 23/223, H01M 4/525, H01M 4/505, G01N 27/72, B03C 1/28, G01N 15/0227, G01N 15/1433, G01N 15/14, G01N 15/02

(54) **METHOD FOR ANALYZING MAGNETIC PARTICLES INCLUDED IN SECONDARY BATTERY MATERIAL**
VERFAHREN ZUR ANALYSE VON MAGNETISCHEN PARTIKELN IN SEKUNDÄRBATTERIEMATERIAL
PROCÉDÉ D'ANALYSE DE PARTICULES MAGNÉTIQUES INCLUSES DANS UN MATÉRIAU DE BATTERIE SECONDAIRE

(30) Priority: 27.02.2023 KR 20230026223; 06.11.2023 KR 20230151738
(43) Date of publication of application: 19.03.2025
(73) Proprietor: LG Energy Solution, Ltd., Seoul 07335 (KR)
(72) Inventor: SON, Young Ki, Daejeon 34122 (KR); MOON, Hee Chul, Daejeon 34122 (KR)
(74) Representative: Goddar, Heinz J.
(86) International application number: PCT/KR2024/000436
(87) International publication number: WO 2024/181670

(56) References cited:
- GB-A- 2 232 098
- JP-A- 2008 145 246
- JP-A- 2010 042 347
- JP-A- 2018 194 539
- JP-A- 2019 011 717
- KR-A- 20190 012 516
- KR-B1- 101 683 264
- US-A1- 2012 128 550
- US-A1- 2013 156 683
- NISHIDA YOUSUKE ET AL: "Simple Sample Preparation for X-Ray Fluorescence Analysis by Using Adhesive Tape", 1 March 2008 (2008-03-01), pages 1 - 9, XP093293591, Retrieved from the Internet <URL:https://www.jstage.jst.go.jp/article/xshinpo/39/0/39_179/_pdf> [retrieved on 20250708]

## Description

### [Technical Field]

The present disclosure relates to a method for analyzing magnetic particles included in a secondary battery material, in particular in an electrode active material.

### [Background]

A lithium secondary battery is a power generating device capable of charging and discharging consisting of a stacked structure of a positive electrode/separator/negative electrode. When a lithium secondary battery is charged, a lithium dissociation reaction is induced at the positive electrode inside the battery, in which lithium contained in the positive active material is oxidized and released, and a lithium insertion reaction occurs at the negative electrode, in which lithium is reduced and enters the negative active material.

During the manufacturing of the positive electrode active material and negative electrode active material, impurities such as foreign bodies (e.g., magnetic foreign bodies), etc., inevitably occur due to abrasion of the manufacturing equipment. Such impurities may reduce productivity in the manufacturing of the secondary battery. In particular, when such magnetic foreign bodies are present in the manufactured secondary battery, they may reduce the electrical characteristics of the secondary battery through various mechanisms or lower the safety.

As an example, if a magnetic foreign body is included in the positive electrode active material, the magnetic foreign body may move to the negative electrode and form a dendrite during the charging and discharging process of the secondary battery. The dendrite precipitated from the negative electrode may penetrate the separator and cause an internal short circuit. This reduces the voltage of the secondary battery and causes serious problems with battery safety, such as ignition, etc.

**In** order to prevent such problems in advance, there is an increasing demand to control the content of magnetic foreign bodies in the electrode slurry at an early stage of electrode production. Therefore, conventionally, magnetic foreign bodies in the electrode active material have been detected by removing a portion of the electrode active material or by directly dissolving the captured metal foreign bodies in an acidic solution using a magnet in the positive electrode active material and analyzing the dissolved acidic solution by inductively coupled plasma optical emission spectroscopy (ICP-OES).

However, in the above method, when the electrode active material is a positive electrode active material, it is difficult to analyze small amounts of magnetic foreign bodies because the wavelength position of the transition metal, which is the main component of the analysis, is close to the wavelength position of the magnetic foreign body, causing interference. In addition, the low voltage failure of the secondary battery due to magnetic materials may be affected by the number or size of magnetic materials. However, conventional analytical methods are limited in that they can only determine the composition and concentration of magnetic materials.

Therefore, there is a need for a technology that may analyze the number or size of magnetic foreign bodies present in electrode active materials, especially positive electrode active materials, with increased reliability.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Related Art Document]

### [Patent Document]

Korean Patent Publication No. 10-2019-0012516
US 2013/156683 A1 discloses that a spherical magnet is mixed with an investigation object sample, and impurities such as non-metallic materials can be washed off with distilled water. The magnet is further processed by drying at 90°C so that the magnetic and/or oxidic contaminants are concentrated at the poles of the magnet. For further analysis, the poles of the magnet are placed on an SEM sample holder which is provided with the conductive, adhering layer.
JP 2010 042347 A discloses the use of magnets with adhesive protection for reducing magnetic contaminants in particle form.
US 2012/128550 A1 and GB 2232098 A disclose an adhesive layer used to protect a magnet during capture of magnetic particles.
N. Yousuke et al., "Simple sample preparation for X-ray fluorescence analysis by using adhesive tape", March 1, 2008, p. 1-9, discloses that when the thickness of the tape which serves as the sample holder is thin, the incident X-rays can easily pass through the tape.

### [Disclosure]

### [Technical Problem]

Accordingly, it is an object of the present disclosure to provide a technology for analyzing, with high accuracy and reliability, the number and/or size of magnetic materials present in an electrode active material.

### [Technical Solution]

To solve the problems described above,
the present disclosure provides, in one embodiment,
capturing an investigation object sample comprising an electrode active material on a first adhesive base material by mixing the investigation object sample comprising an electrode active material with a magnetic member having a first adhesive base material provided on a surface S1,
removing a non-magnetic material by cleaning a surface of the first adhesive base material on which the investigation object sample is captured S2,
obtaining a base material assembly by attaching a second adhesive base material to the surface of the first adhesive base material from which the non-magnetic material has been removed S3,
separating the base material assembly from the magnetic member S4; and
performing an analysis on the separated base material assembly to analyze at least one of a number and a size of magnetic foreign bodies at the base material assembly S5.

The investigation object sample may have a weight of 50 grams to 500 grams.

The first adhesive base material may have a light transmittance of 30% or less in the range from 300 nm to 800 nm in the UV-Vis light transmittance analysis, and the second adhesive base material may have a light transmittance of 70% or more in the range from 300 nm to 800 nm in the UV-Vis light transmittance analysis.

After separating the base material assembly from the magnetic member S4, the surface of the base material assembly may be cleaned.

Analyzing the magnetic foreign bodies S5 may be performed by the following steps:

calculating at least one of the number and the size of magnetic foreign bodies captured in the base material assembly by irradiating light to the surface of the separated base material assembly in order to obtain a generated secondary light, deriving a shading map representing the surface of the base material assembly in pixel units from the generated secondary light, and performing a shading analysis of the derived shading map S5-1,reading a presence of the magnetic foreign body in an optical image separately obtained from the surface of the base material assembly S5-2; and verifying a calculated value from the shading analysis based on the reading result of the optical image S5-3.

Here, the shading map may be a pixel unit representation of one or more of color, chroma, and brightness depending on the sensitivity of the secondary light. T shading map may be derived by a spectroscopic device using X-ray fluorescence (XRF).

The shading analysis may comprisegrouping pixels satisfying a preset conditions of the shading map and quantifying a grouped area.

The optical image reading may be performed for particles having an average size of 10 µm or more.

Verifying the calculated value from the shading analysis S5-3 may be performed by: judging the calculated value from the shading analysis at the corresponding position of the shading map as noise if the magnetic foreign body is read as not being present at the predetermined position of the optical image; and verifying the calculated value by comparing the shape of the magnetic foreign body read in the optical image with the shape of the grouped area at the corresponding position at the shading map if the magnetic foreign body is read as being present at the predetermined position of the optical image.

The magnetic foreign body may comprise one or more of iron (Fe), nickel (Ni), cobalt (Co), manganese (Mn), chromium (Cr), zinc (Zn), titanium (Ti), and copper (Cu).

The magnetic foreign body analysis method according to the present disclosure has the feature that magnetic foreign bodies present inside the investigation object sample may be selectively analyzed by using a base material assembly comprising a first adhesive base material and a second adhesive base material having different light transmittances, and thus the analysis results may be highly reliable. Further, the method of analyzing magnetic foreign bodies has the advantage that the number and/or size of magnetic foreign bodies may be easily analyzed with high accuracy by using a shading map and an optical image of the base material assembly.

### [Brief Description of the Drawings]

FIG. 1 is a process diagram illustrating a method for analyzing magnetic foreign bodies according to the present disclosure.
FIG. 2 is a cross-sectional view schematically illustrating the structure of a base material assembly according to the present disclosure.
FIG. 3 is an enlarged image of a portion of a shading map for iron particles obtained according to the present disclosure.
FIG. 4 is an enlarged image of a portion of an optical image of a base material obtained according to the present disclosure.

### [Detailed Description]

The present disclosure may have various modifications and various embodiments, and thus specific embodiments thereof will be described in detail below.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, or plate is disposed "on" another part, this includes not only a case in which one part is disposed "directly on" another part, but a case in which still another part is interposed therebetween. In contrast, when a part of a layer, film, region, or plate is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

Hereinafter, the present disclosure is described in more detail.

**Method for analyzing magnetic foreign body**
the present disclosure provides, in one embodiment,
capturing an investigation object sample comprising an electrode active material on a first adhesive base material by mixing the investigation object sample with a magnetic member having the first adhesive base material provided on a surface S1,
removing a non-magnetic material by cleaning a surface of the first adhesive base material on which the investigation object sample is captured S2,
obtaining a base material assembly by attaching a second adhesive base material to the surface of the first adhesive base material from which the non-magnetic material has been removed S3,
separating the base material assembly from the magnetic member S4; and
performing an analysis on the separated base material assembly to analyze at least one of a number and a size of magnetic foreign bodies entrapped in the base material assembly S5.

The present disclosure relates to a method for analyzing a magnetic foreign body included in an electrode active material.

In general, electrode active materials include magnetic foreign bodies that are inevitably mixed in during the manufacturing process. As representative magnetic foreign bodies, there are various types of metal foreign bodies. For example, the magnetic foreign bodies may be one or more metal foreign bodies selected from iron (Fe), nickel (Ni), cobalt (Co), manganese (Mn), chromium (Cr), zinc (Zn), titanium (Ti), and copper (Cu). In this case, the metal foreign bodies may be included in the form of metal particlesand metal nitride particles.

Among them, manganese (Mn), cobalt (Co), nickel (Ni), etc., may compose positive electrode active materials in the form of complex oxides. However, during the manufacturing process of the positive electrode active material, metal elements that are not compounded and remain inside the positive electrode active material may form magnetic foreign bodies. In addition, magnetic foreign bodies including iron (Fe)may be included in the electrode active material due to abrasion of the manufacturing equipment during the manufacturing process of the electrode active material.

When an electrode is manufactured with an electrode active material containing such magnetic foreign bodies, the metal foreign bodies included in the electrode may act as foreign bodies that are unable to participate in electrochemical reactions during charging and discharging of the secondary battery, causing unexpected failures such as voltage failure, etc.

Since the magnetic foreign bodies are smaller than the size of the electrode active material, it is difficult to detect them, and it is difficult to remove them through a filter. Therefore, it is important to analyze the magnetic foreign bodies present in the electrode active material prior to manufacturing the electrodes of the secondary battery, and it is particularly desirable to check the number and/or size of the magnetic foreign bodies in order to solve a defect problem such as a defect in voltage, etc.

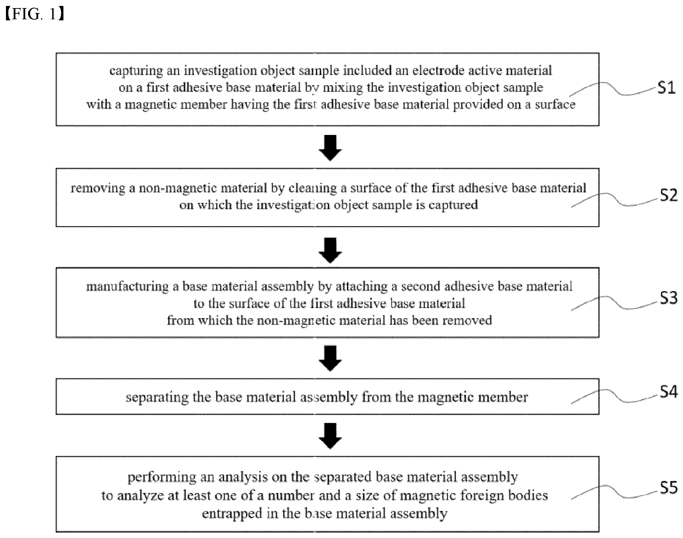

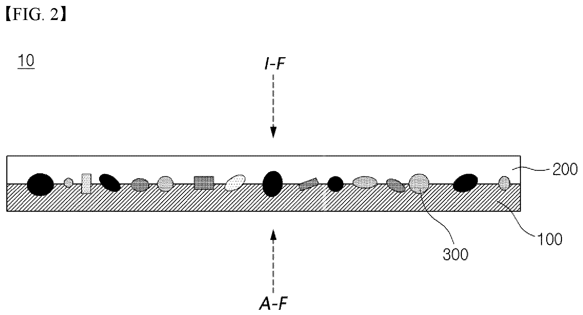

Accordingly, referring to FIGS. 1 and 2, the present disclosure provides a method for analyzing a magnetic foreign body 300 included in an electrode active material. The method for analyzing a magnetic foreign body 300 may be carried out by mixing an investigation object sample included an electrode active material with a magnetic member having a first adhesive base material 100 on a surface, capturing the investigation object sample on the first adhesive base material 100 S1, cleaning a surface of the first adhesive base material 100 on which the investigation object sample is captured to remove a non-magnetic substance S2, attaching a second adhesive base material 200 to the surface of the first adhesive base material 100 to obtain a base material assembly 10 S3 and separating it S4, and then analyzing the magnetic foreign body 300 captured inside the base material assembly 100 S5.

Hereinafter, each step of the above magnetic foreign body analysis method will be described in more detail.

First, capturing an investigation object sample on the first adhesive base material 100 S1 refers to a process of mixing an investigation object sample comprising an electrode active material and a magnetic member to capture the investigation object sample on the surface of the magnetic member.

At this time, the investigation object sample is a sample comprising the electrode active material as a main component and may include magnetic foreign bodies and/or non-magnetic foreign bodies generated in the manufacturing process of the electrode active material together with the electrode active material.

The electrode active material may comprise a predetermined positive electrode active material or a predetermined negative electrode active material. For example, the electrode active material may be a lithium metal complex oxide if it is a positive electrode active material. The lithium metal complex oxide is not particularly limited as long as it is conventionally applied in the art, but may be, for example, LiₓCoO₂ (0.5<x<1.3), LiₓNiO₂ (0.5<x<1.3), LiₓMnO₂ (0.5<x<1.3), LiₓMn₂O₄ (0.5<x<1.3), Liₓ(NiₐCo_{b}Mn_{c})O₂ (0.5<x<1.3, 0<a<1, 0<b<1, 0<c<1, a+b+c=1), LiₓNi_{1-y}Co_{y}O₂ (0.5<x<1.3, 0<y<1), LiₓCo_{1-y}Mn_{y}O₂ (0.5<x<1.3, 0≤y<1), LiₓNi_{1-y}Mn_{y}O₂ (0.5<x<1.3, 0≤y<1), Liₓ(NiₐCo_{b}Mn_{c})O₄ (0.5<x<1.3, 0<a<2, 0<b<2, 0<c<2, a+b+c=2), LiₓMn_{2-z}Ni_{z}O₄ (0.5<x<1.3, 0<z<2), LiₓMn_{2-z}Co_{z}O₄ (0.5<x<1.3, 0<z<2), LiₓCoPO₄ (0.5<x<1.3), and LiₓFePO₄ (0.5<x<1.3). Further, the lithium metal composite oxide may be coated with a metal or metal oxide, such as aluminum (Al). Furthermore, the positive electrode active material may include a metal sulfide, a metal selenide, and a metal halide in addition to the lithium metal composite oxide.

Further, the electrode active material may include carbon material, lithium metal, silicon, and tin when it is a negative electrode active material. When carbon material is used as the negative electrode active material, both low crystalline carbon and high crystalline carbo may be used. Examples of low-crystalline carbons include soft carbon and hard carbon, while examples of high-crystalline carbons include natural graphite, Kish graphite, and pyrolytic carbon, mesophase pitch based carbon fiber, mesocarbon microbeads, mesophase pitches, and high temperature calcined carbons such as petroleum or coal tar pitch derived cokes, etc.

Furthermore, the investigation object sample may be limited to a predetermined weight in order to obtain more accurate analysis results. Specifically, the investigation object sample may have a weight of 50 g to 500 g, and more specifically, it may have a weight of 50 g to 400 g, 50 g to 300 g, 50 g to 200 g, 50 g to 100 g, 100 g to 500 g, 200 g to 500 g, 300 g to 500 g, 400 g to 500 g, 100 g to 300 g, 200 g to 400 g, or 100 g to 200 g.

Further, the mixing of the investigation object sample and the magnetic member may be performed in a manner generally practiced in the art for mixing materials. For example. It may be performed by introducing the investigation object sample and the magnetic member into the reactor, respectively, sealing the reactor, and then shaking the reactor or stirring it using an impeller provided inside the reactor.

Further, the magnetic member may comprise an electromagnet and/or a permanent magnet. The electromagnets may include both direct current electromagnets and alternating current electromagnets. Further, the permanent magnets may include both magnets of ferromagnetic nature and magnets of soft magnetic nature, including NdFeB-based magnets, SmCo-based magnets, Ferrite magnets, Alnico magnets, FeCrCo-based magnets, and Bond magnets (Nd-Fe-B, Sm-Fe-N, Sm-Co, Ferrite).

Furthermore, the magnetic member may be provided with a first adhesive base material 100 on its surface to capture substances included in the investigation object sample regardless of whether they are magnetized or not. **In** other words, the magnetic member may capture both electrode-active substances and foreign bodies (e.g., magnetic foreign bodies and non-magnetic foreign bodies) included in the investigation object sample on its surface by the first adhesive base material 100. For this, the first adhesive base material 100 may be arranged on the surface of the magnetic member, but may be arranged so that one side having adhesive properties is exposed to the outside.

Furthermore, the first adhesive base material 100 may be an adhesive base material having adhesive properties on both sides, and in some cases, may be a multi-layer base material comprising a release layer on the inner side of the interface with the magnetic member for adhesion and detachment from the magnetic member. As one example, the first adhesive base material 100 may be a double-sided adhesive tape, a double-sided adhesive film, or a double-sided adhesive sheet.

In addition, the first adhesive base material 100 may be an opaque base material that is difficult to transmit light. Specifically, the first adhesive base material 100 may have a light transmittance of 30% or less in the range of 300 nm to 800 nm in a UV-Vis light transmittance analysis.

When the light transmittance is 30% or less in a wavelength range corresponding to visible light (in other words, 300 nm to 800 nm), the materials present on the first adhesive base material 100 may be easily identified with the naked eye or microscope without limitation on the color or chroma of the base material. Meanwhile, the first adhesive base material 100 preferably has a low light transmittance in the visible light region in order to visually check whether the investigation object sample is uniformly captured on the surface, and to check the presence or shape of magnetic foreign bodies 300 selectively captured inside the base material assembly 10 of the first adhesive base material 100 and the second adhesive base material 200 after the base material assembly 10 is obtained. Further, when the first adhesive base material 100 has a low light transmittance in the visible light region, it may be possible to easily conceal the magnetic foreign bodies 300 attached on the surface of the magnetic member before the first adhesive base material 100 is arranged on the magnetic member, thereby further increasing the accuracy and reliability of the magnetic foreign body analysis results.

Accordingly, the first adhesive base material 100 may have a light transmittance of 30% or less in the range of 300 nm to 800 nm, and more specifically, it may be 25% or less, 20% or less, 15% or less, 10% or less, 5% or less, more than 0% and less than 30%, 5% to 30%, 5% to 20%, or 5% to 15%.

Further, the first adhesive base material 100 may be a dye dispersed in a resin such as cellulose, polyethylene, polypropylene, poly(ethylene-propylene), poly(ethylene-propylene), polyimide, or polyacrylate to satisfy the above light transmittance, although this is not particularly limited provided that the material is not influenced by magnetism.

Further, the first adhesive base material 100 may have an appropriate thickness such that the magnetic force of the magnetic member may be applied to the magnetic foreign body 300 of the surface captured investigation object sample. Specifically, the first adhesive base material 100 may be 5 µm to 200 µm, and more specifically, it may be 5 µm to 150 µm, 5 µm to 120 µm, 5 µm to 100 µm, 10 µm to 120 µm,20 µm to 90 µm,50 µm to 100 µm, or 30 µm to 80 µm. The present disclosure may enable the magnetism of the magnetic member to be uniformly realized on the surface of the first adhesive base material 100 by adjusting the average thickness of the first adhesive base material 100 to the above range. Accordingly, magnetic foreign bodies 300 included in the investigation object sample may be captured on the surface of the first adhesive base material 100 in advance of non-magnetic substances when the investigation object sample and the magnetic member are mixed.

Next, removing the non-magnetic substances among the investigation object samples captured on the surface of the first adhesive base material 100 S2 refers to a process in which, by cleaning the surface of the first adhesive base material 100, the magnetic foreign bodies 300 among the investigation object samples captured by the adhesion of the first adhesive base material 100 are kept in a captured state by the magnetic force of the magnetic member, and the non-magnetic substances such as electrode active materials and non-metallic materials that do not have magnetism are detached from the surface. The present disclosure may selectively capture only the magnetic foreign body 300 to be analyzed on the surface of the magnetic member through this process.

In this case, the non-magnetic material may include a non-metallic material that is not affected by the magnetism of the magnetic member, and in some cases, it may include a metallic material or an antimagnetic or semi-ferromagnetic material that is less affected by the magnetism of the magnetic member.

Further, the cleaning may be performed by a predetermined cleaning solution. Specifically, the cleaning solution may comprise water and/or 1 to 4 alcohols of carbon number such as methanol, and ethanol. Here, the water may be an industrial water that does not contain impurities such as metals/metal ions affected by the magnetic member as well as non-metallic solid particles, microorganisms, organic matter, etc. In particular, the water may be distilled water that has been subjected to at least one distillation process, purified by ion exchange and/or reverse osmosis.

Further, the cleaning may be performed by controlling the spraying speed of the cleaning solution so that the electrode-active substances and non-magnetic substances dissociate from the first adhesive base material 100, or by filling a separate reactor with the cleaning solution and immersing the magnetic member therein and shaking/stirring. In some cases, the cleaning may selectively retain only magnetic foreign bodies 300 on the first adhesive base material 100 by dissolving the adhesive/adhesive layer that implements adhesion on the adhesive surface of the first adhesive base material 100 that captures the electrode active material and the non-magnetic material with the cleaning solution.

Next, obtaining the base material assembly S3 refers to a process of forming a base material assembly 10 that attaches a second adhesive base material 200 to a surface of the first adhesive base material 100 in which magnetic foreign bodies 300 are remained on the surface. In this process, the magnetic foreign bodies 300 are fixed at the bonding interface of the first adhesive base material 100 and the second adhesive base material 200, and the bonding interface is not included any magnetic foreign bodies other than the magnetic foreign bodies collected from the investigation object sample.

Conventional magnetic foreign body analysis using a magnetic member has the limitation that magnetic foreign bodies attached to the surface of the magnetic member prior to the analysis of the investigation object sample and additional magnetic foreign bodies generated during the analysis process are present on the surface of the magnetic member, and therefore, the analysis reliability of the magnetic foreign bodies included in the investigation object sample is not high.

However, the base material assembly 10 of the present disclosure is capable of capturing magnetic foreign bodies 300 using a first adhesive base material 100 capable of concealing magnetic foreign bodies donated to the surface of the magnetic member prior to analysis of the investigation object sample, and at the same time, fixing the captured magnetic foreign bodies 300 on the first adhesive base material 100 using a second adhesive base material 200 that is easy to transmit light, while preventing additional magnetic foreign bodies generated during the analysis process from being captured on the first adhesive base material 100. Accordingly, the present disclosure is characterized in that magnetic foreign bodies 300 included in the investigation object sample may be selectively captured and analyzed, and thus the accuracy and reliability of the analysis results are extremely high.

For this, the second adhesive base material 200 may be a base material having an adhesive surface on one side and a non-adhesive surface on the other side. Such a second adhesive base material 200 may be a single-sided adhesive tape, a single-sided adhesive film, or a single-sided adhesive sheet. The second adhesive base material 200 may be arranged so that the adhesive side is adhered to the first adhesive base material 100.

Further, the second adhesive base material 200 may have excellent light transmission for analyzing the magnetic foreign body 300. For example, the second adhesive base material 200 may have a light transmittance of 70% or more in the range of 300 nm to 800 nm in UV-Vis light transmittance analysis, and more specifically, may have a light transmittance of 75% or more, 80% or more, 85% or more, 90% or more, 95% or more, 70% or more, 99% or more, 80% or more, 95% or more, 90% or more, 99% or more, 70% or more, or 80% or more.

The second adhesive base material 200 has the advantage of exhibiting a high light transmittance in a wavelength range corresponding to visible light (in other words, from 300 nm to 800 nm), thereby facilitating the acquisition of an optical image of the base material assembly 10 using an optical microscope utilizing visible light.

Next, separating the base material assembly 10 S4 refers to a process of detaching the base material assembly 10 in which the first adhesive base material 100 and the second adhesive base material 200 are bonded from the magnetic member to prepare a specimen for analyzing a magnetic foreign body 300 captured inside the base material assembly 10.

**In** this case, the base material assembly 10 separated from the magnetic member may have foreign bodies (e.g., magnetic foreign bodies and non-magnetic foreign bodies, etc.) generated during the base material assembly forming process present on the surface. Among these, the foreign bodies present on the surface of the second adhesive base material 200 may serve as a factor that increases an error of the analysis result when performing an analysis on the base material assembly 10. Therefore, the present step S4 may further perform a process of cleaning the surface of the base material assembly 10 after separating the base material assembly 10 from the magnetic member in order to increase the accuracy of the analysis result.

The cleaning may be performed by a predetermined cleaning solution. Specifically, the cleaning solution may be water and/or an alcohol of 1 to 4 carbon numbers such as methanol, or ethanol. Here, the water may be industrial water that does not contain impurities such as metals/metal ions affected by the magnetic member, as well as non-metallic solid particles, microorganisms, organic matter, etc. In particular, the water may be distilled water that has been subjected to at least one distillation process, purified by ion exchange and/or reverse osmosis.

Next, analyzing the magnetic foreign bodies 300 S5 comprises performing an analysis on the base material assembly 10 separated from the magnetic member to analyze at least one of the number and the size of magnetic foreign bodies 300 captured at the interface of the first adhesive base material 100 and the second adhesive base material 200.

Here, the analysis may include spectroscopic analysis and optical image analysis of the base material assembly 10. Specifically, S5 may be performed by the following:
deriving a shading map representing the surface of the base material assembly 10 on a pixel unit from secondary light generated by irradiating light on the surface of the separated base material assembly 10, and performing a shading analysis of the derived shading map to calculate at least one of a number and a size of magnetic foreign bodies 300 entrapped in the base material assembly 10 S5-1,
separately obtaining an optical image of the surface of the base material assembly 10, and reading the presence of magnetic foreign bodies 300 from the obtained optical image S5-2; and
validating the calculated value from the shading analysis based on the reading of the optical image S5-3.

Here, the S5-1 refers to performing a spectroscopic analysis on the base material assembly 10 separated from the magnetic member to derive a shading map and analyzing the shading of the shading map to calculate at least one of a number of magnetic foreign bodies 300 and a size.

The spectroscopic analysis refers to a method of irradiating a surface of the base material assembly 10 with light satisfying a predetermined wavelength and obtaining and analyzing the secondary light generated by the magnetic foreign bodies 300 inside the base material assembly 10. Accordingly, spectroscopic analysis may be performed on an exposed surface of a second bonding substrate having a high light transmittance in the base material assembly 10 so that the irradiated light may encounter the magnetic foreign body 300.

Further, the spectroscopic analysis comprises scanning the second adhesive base material surface 200 of the base material assembly 10 to derive a shading map by element. The scanning may be performed over the entire surface of the second adhesive base material 200 being analyzed, and the surface width of the second adhesive base material 200 may be adjusted to a predetermined range. Further, the scanning is accomplished by irradiating light satisfying a predetermined wavelength to a predetermined point on the surface of the second adhesive base material 200, and successively performing a series of processes to obtain the second light generated thereafter.

Here, a means for irradiating light satisfying a predetermined wavelength, such as a size of a light irradiation tip, may determine a width of the light irradiated on the surface of the second adhesive base material 200. The width of the light may be a reference for imaging the scanned second light in forming a shading map and may be expressed in pixels. For example, if the light irradiation tip of the spectroscopic instrument has a diameter of 30 µm and the surface width of the second adhesive base material 200 is 15 mm across × 15 mm long, one pixel of the derived shading map has a resolution of 30 µm, and the shading map may be expressed as 500 pixels across × 500 pixels long.

Meanwhile, the light irradiated on the surface of the second adhesive base material 200 may be a light conventionally applied in the art for detecting magnetic foreign bodies 300. Specifically, the light may be gamma rays (γ rays), x-rays (X-rays), ultraviolet (UV), visible light, infrared (IR), and electromagnetic waves. Further, the spectroscopic analysis may be performed by a method capable of analyzing trace amounts of a substance using the above-described light. For example, the spectroscopic analysis may be X-ray fluorescence analysis (XRF) in which fluorescent X-rays are obtained as secondary light. The X-ray fluorescence analysis (XRF) has the advantage that even extremely small amounts of foreign matter can be analyzed precisely by elemental composition.

In addition, the shading map derived above may be expressed in one or more of chroma, color, and brightness depending on the sensitivity of the secondary light obtained at the time of scanning, through a predetermined software or program, and may be applied on pixels unit basis. The color refers to a color for a chromatic color and an achromatic color, the chroma refers to a darkness or lightness of the color for a chromatic color, and the brightness refers to a brightness of the color for an achromatic color.

In one example, the shading map may be represented with a brightness adjusted on a pixel unit according to the sensitivity of the secondary light obtained when represented in achromatic colors. In this case, the shading map may be represented as a white or near-white color, with the pixel representing the corresponding point having a high brightness when the sensitivity of the secondary light is high. On the other hand, when the sensitivity of the secondary light is low, the shading map may be represented as black or a color close to black by implementing a low brightness of the pixel representing the corresponding point.

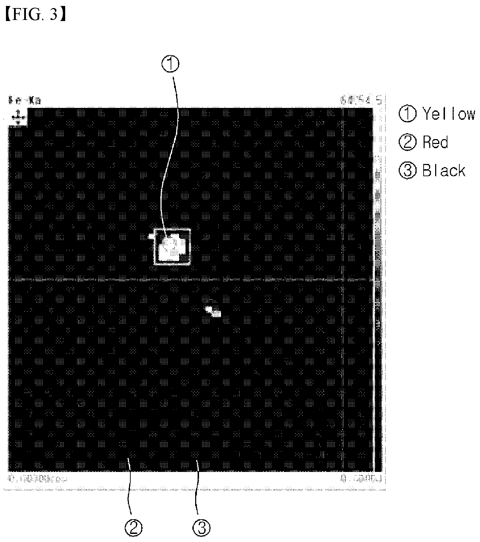

As another example, the shading map may be represented with colors adjusted on a pixel unit according to the sensitivity of the secondary light obtained when represented with both chromatic and achromatic colors. For example, the shading map may be represented such that when the sensitivity of the secondary light is high, the color of the pixel representing the corresponding point is yellow, as shown in FIG. 3. On the other hand, the shading map may be represented as red, wherein the color of the pixel representing the corresponding point is different from yellow when the sensitivity of the secondary light is low.

The shading map may be subjected to shading analysis to identify magnetic foreign objects, and the quantification of the identified magnetic foreign objects may yield at least one of a number and a size. Specifically, the shading analysis may mean grouping pixels in the mapped shading map that satisfy a predetermined condition based on the sensitivity of the secondary light and quantifying the grouped regions as magnetic foreign bodies. In this case, the preset conditions may be conditions for one or more of chroma, color, and brightness depending on the representation method of the shading map. For example, when the pixels of the shading map are represented by the CIE LAB colorimetric system, if the deviations of L*, a*, and b* between adjacent pixels meet a predetermined range, the pixels may be recognized and grouped as the same region, and if the deviations are larger than the predetermined range, the pixels may be recognized and grouped as different regions.

As one example, when each pixel in the shading map is represented by the CIE LAB colorimetric system, if the deviation of L*, a*, and/or b* between adjacent pixels is 10 or less, 5 or less, 3 or less, or 1 or less, the pixels may be recognized as the same region and grouped together. On the other hand, if the deviation of L*, a*, and b* between neighboring pixels is greater than 10, greater than 5, greater than 3, or greater than 1, they may be recognized as different regions and not grouped together.

As another example, when each pixel in a shading map is represented by a CIE LAB colorimetric system, if the △E deviation of each pixel is less than or equal to 10, less than or equal to 5, less than or equal to 3, or less than or equal to 1, the pixels can be recognized as the same region and grouped together. On the other hand, if the △E deviation between neighboring pixels is greater than 10, greater than 5, greater than 3, or greater than 1, they can be recognized as different regions and not grouped together.

In this way, grouping the pixels of the shading map by shading analysis may identify the grouped pixels as magnetic foreign bodies 300, and quantify the number and/or size of the identified regions. In this case, said quantification may be calculated using a number of pixels in the specified region and a resolution per pixel.

Further, the above S5-2 refers to separately obtaining and analyzing an optical image of a surface of the spectroscopically analyzed base material assembly 10 (specifically, a surface of the second adhesive base material 200).

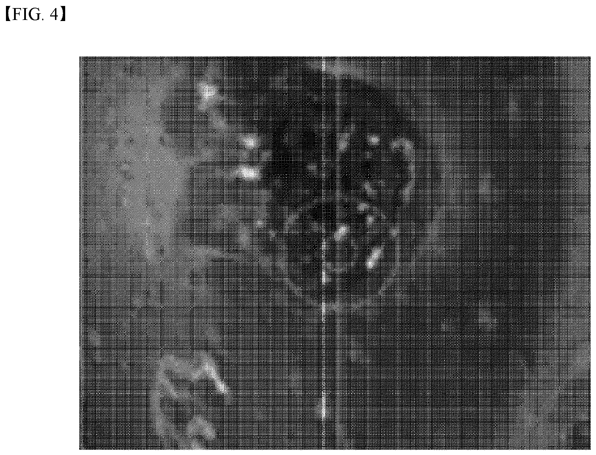

The optical image is an image obtained using an optical microscope as shown in FIG. 4, wherein the optical microscope may be applied without limitation as long as it is capable of obtaining a magnified image of the surface of the specimen using visible light.

Analyzing the optical image means reading the presence of a magnetic foreign body 300 by observing whether a particle shape satisfying a predetermined size is present in the obtained optical image.

Conventional scanning electron microscopes (SEM) or transmission electron microscopes (TEM) have been used to obtain images of specimens. The present disclosure utilizes an electron beam to image the interaction of the electron beam with the specimen, but the magnetic foreign body 300 in the present disclosure has a captured form surrounded by the adhesive base material, making it difficult to directly interact with the electron beam. On the other hand, an optical microscope utilizing visible light may intuitively determine the shape of the magnetic foreign body captured inside the base material assembly 10, and thus, the presence of the magnetic foreign body 300 may be read easily.

In addition, magnetic foreign bodies 300 that generally cause undervoltage problems or internal short circuits in secondary batteries may meet the predetermined size. In other words, magnetic foreign bodies 300 smaller than the predetermined size may be less likely to cause undervoltage problems or internal short circuits. Further, it is difficult in practice to completely remove the magnetic foreign bodies 300 present in the electrode active material. Therefore, the magnetic foreign bodies 300 read in the optical image may have a particle shape that satisfies the predetermined size, and the particle shape smaller than the predetermined size may be read as not having magnetic foreign bodies present in the base material assembly 10. In this case, the magnetic foreign body to be read may be a particle having an average size of 10 µm or more, and more specifically, it may be a particle having an average size of 15 µm or more, 20 µm or more, 25 µm or more, 30 µm or more, 35 µm or more, 40 µm or more, 10 µm to 200 µm, 20 µm to 200 µm, 30 µm to 200 µm, 40 µm to 200 µm, 10 µm to 150 µm, 10 µm to 100 µm, 20 µm to 100 µm, 20 µm to 80 µm, 20 µm to 60 µm.

Finally, the above S5-3 refers to a process of verifying the calculated value from the shading analysis based on the reading result of the optical image.

Since the value calculated by shading analysis of the shading map is calculated from the result of mapping according to the sensitivity of the obtained secondary X-ray, the condition of the size of the magnetic foreign body may not be reflected. Therefore, it is desirable to verify the shading analysis output by reflecting the results read from the optical image.

Accordingly, in the present S5-3, if a magnetic foreign body is read as not being present at a predetermined position of the optical image, the calculated value from the shading analysis at the corresponding position of the shading map may be judged as noise. And if a magnetic foreign body is read as being present at the predetermined position of the optical image, the calculated value from the shading analysis may be verified by comparing a shape of the magnetic foreign body read in the optical image with a shape of a grouped region at the corresponding position of the shading map.

More specifically, the verification may include identifying a location in the optical image where a magnetic particle is read and a corresponding location in the shading map, and individually verifying that the shaded output at the corresponding location in the shading map is the same magnetic particle by comparing the shape of the identified magnetic particle at each location in the optical image with the shape of the region of the grouped pixels.

Such verification may be performed on each of the shading maps derived for each element, and the magnetic particles identified in each shading map may be determined to be magnetic particles composed of that element. For example, the verification may be performed by comparing the shading maps derived by performing a spectroscopic analysis for iron (Fe) on the same base material assembly with separately obtained optical images, wherein the magnetic particles verified may be magnetic particles that include iron (Fe).

The present disclosure has the advantage that, by having the above-described configuration, only magnetic foreign bodies present inside the investigation object sample may be selectively analyzed, so that the reliability of the analysis results is high, and the number and/or size of the magnetic foreign bodies may be easily analyzed with high accuracy using the shading map and the optical image representing the surface of the base material assembly including the magnetic foreign bodies on a pixels unit.

Hereinafter, the present disclosure will be described in more detail by way of examples and experimental examples.

However, the following examples and experimental examples are only exemplary of the present disclosure, and the present disclosure is not limited to the following examples and experimental examples.

### Examples 1 to 2 and Comparative examples 1 to 2. Analysis of magnetic foreign body in electrode active material

An investigation object sample was prepared by adding 200 g of LiNi_{0.6}Co_{0.2}Mn_{0.2}O₂, a positive electrode active material, and 25 mg of iron particles having an average particle diameter (D₅₀) of about 25 µm to the reactor and stirred.

Then, a permanent magnet in the form of a square column (about 2 cm across X 2 cm long X 2 cm high) was prepared as a magnetic member, and the permanent magnet was put into the reactor and mixed with the investigation object sample while stirring (S1). At this time, the permanent magnet had a double-sided tape attached to its surface as a first adhesive base material, and the adhesion of the double-sided tape was adjusted as shown in Table 1 below. Further, the double-sided tape had a light transmittance of about 20% to 22% in the 300 nm to 800 nm wavelength region and an average thickness of about 50 µm to 60 µm.

Then, the permanent magnet with the investigation object sample captured on its surface was taken out of the reactor and cleaned with reverse osmosis purified water to dissociate the non-magnetic material such as the positive electrode active material from the surface of the double-sided tape (S2).

A base material assembly having magnetic particles fixed at the bonding interface of the double-sided tape and the single-sided tape was prepared by attaching the single-sided tape to the double-sided tape from which the non-magnetic material was removed (S3). At this time, the attachment of the single-sided tape was adjusted as shown in Table 1 below. Further, the above single-sided tape had a light transmittance in the 300-800 nm wavelength region of about 88-95%.

The prepared base material assembly was separated by dissociation from the permanent magnet (S4), and the surface of the separated base material assembly was cleaned with reverse osmosis purified water.

The base material assembly was then fixed to the sample portion of an XRF spectrometer so that X-rays could be irradiated onto the second adhesive base material surface. Then, after irradiating the fixed second adhesive base material surface with X-rays, the surface of the base material assembly was spectroscopically analyzed by a mapping scanning method in which the second X-rays generated at the irradiation point were obtained and a series of processes were successively performed to create a shading map on a unit of pixels according to the sensitivity thereof. At this time, the above XRF spectrometer had a resolution and scan speed of 30 µm/pixel and 5 ms, respectively. Further, the total area of the base material assembly being scanned was set to be 15 mm wide × 15 mm long. Further, the shading maps were created for each element of iron (Fe), nickel (Ni), cobalt (Co), manganese (Mn), chromium (Cr), zinc (Zn), titanium (Ti), and copper (Cu) so that the pixels had color deviations depending on the sensitivity of the obtained secondary light. Shading analysis of the shading maps was performed to calculate the number and size of magnetic foreign bodies (S5-1). Specifically, each pixel of the shading map was recognized as the same area if the △E deviation of each pixel was 3 or less when expressed by the CIE LAB colorimetric system, and the pixels were grouped, and the grouped areas were judged as magnetic foreign bodies. The number of regions determined to be magnetic foreign bodies and their respective sizes were quantified.

Then, an optical image was obtained from the second adhesive base material surface of the base material assembly fixed to the sample portion using an optical microscope separately provided in the XRF spectrometer. At this time, the optical microscope had a minimum resolution of 15 µm to 22 µm. The shape of the magnetic foreign body was read from the obtained optical image based on whether a particle shape with an average size of 20 µm was present (S5-2).

Based on the reading of the optical image, the previously calculated value was validated (S5-3). Specifically, in the above verification, if the magnetic foreign body was read as not existing at a predetermined point of the optical image, the calculated value from the shading analysis at the corresponding point of the shading map was judged as noise. In addition, if a magnetic foreign body was detected to be present at a predetermined point in the optical image, the calculated value from the shading analysis was verified by comparing the shape of the magnetic foreign body detected in the optical image with the shape of the grouped area at the corresponding location in the shading map to confirm that it is the same magnetic foreign body.

To evaluate the accuracy and reliability of the analyzed results, the error rate of each analyzed result was calculated based on the number and average size of iron particles included in the investigation object sample. In this case, the number of iron particles included in the investigation object sample was calculated by finding ① the volume of one iron particle with an average particle diameter (D₅₀) of 25 µm and ② the volume of 25 mg of said iron particle, respectively, and the error rate was calculated based on the number of calculated iron particles. The results are shown in Table 1 below.

**[Table 1]**

| | | Comparative example 1 | Comparative example 2 | Example 1 | Example 2 |
|---|---|---|---|---|---|
| Applica bility | First adhesive base material | X | O | O | O |
| | Second adhesive base material | X | X | O | O |
| | Spectroscopic and shading analysis | O | O | O | O |
| | Optical image analysis | O | O | X | O |
| Error rate for number | | ±11% | ±13% | ±1.4% | ±0.9% |
| Error rate for size | | ±8.9% | ±6.7% | ±2.5% | ±1.8% |

As shown in Table 1 above, it is confirmed that the magnetic foreign body method according to the present disclosure has a remarkably low error rate of less than ±5% for the number and size of magnetic foreign bodies included in the investigation object sample.

From these results, it can be seen that the magnetic foreign body method according to the present disclosure can analyze the number and size of magnetic foreign bodies included in the electrode active material with high accuracy and reliability.

As above, the present disclosure has been described in more detail through the drawings and embodiments.

Thus, the technical scope of the present disclosure is not limited to the detailed description of the specification, but should be determined by the claims of the patent.

### [Description of Reference Numerals]

10: base material assembly
100: first adhesive base material
200: second adhesive base material
300: magnetic foreign body collected from electrode active material
A-F: side that is in contact with magnetic member
I-F: side to analyze

## Claims

1. A method of analyzing magnetic foreign bodies comprising:
capturing an investigation object sample comprising an electrode active material on a first adhesive base material (100) by mixing the investigation object sample with a magnetic member having the first adhesive base material (100) provided on a surface S1,
removing a non-magnetic material by cleaning a surface of the first adhesive base material (100) on which the investigation object sample is captured S2,
forming a base material assembly (10) by attaching a second adhesive base material (200) to the surface of the first adhesive base material (100) from which the non-magnetic material has been removed S3,
separating the base material assembly (10) from the magnetic member S4; and
performing an analysis on the separated base material assembly (10) to analyze at least one of a number and a size of magnetic foreign bodies at the base material assembly (10) S5.

2. The method of claim 1, wherein the first adhesive base material (100) has a light transmittance of 30% or less in a range from 300 nm to 800 nm in a UV-Vis light transmittance analysis.

3. The method of claim 1, wherein the second adhesive base material (200) has a light transmittance of 70% or more in a range from 300 nm to 800 nm in a UV-Vis light transmittance analysis.

4. The method of claim 1, wherein analyzing the magnetic foreign bodies is performed by the following steps:
calculating at least one of the number and the size of magnetic foreign bodies S5 captured in the base material assembly (10) by irradiating light to a surface of the separated base material assembly (10) in order to obtain a generated secondary light, deriving a shading map representing the surface of the base material assembly (10) in pixel units from the generated secondary light, and performing a shading analysis of the derived shading map S5-1,
reading a presence of the magnetic foreign bodies in an optical image separately obtained from the surface of the base material assembly (10) S5-2; and
verifying a calculated value from the shading analysis based on the reading result of the optical image S5-3.

5. The method of claim 4, wherein the shading map is a pixel unit representation of one or more of color, chroma, and brightness depending on a sensitivity of the generated secondary light.

6. The method of claim 4, wherein the shading analysis comprises grouping pixels satisfying a preset condition of the shading map, and quantifying a grouped area.

7. The method of claim 4, wherein the shading map is obtained by X-ray fluorescence (XRF).

8. The method of claim 4, wherein the optical image reading is performed for particles having an average size of 10 µm or more.

9. The method of claim 4, wherein verifying the calculated value from the shading analysis S5-3 is performed by:
judging the calculated value at a corresponding position at the shading map as noise in response to the magnetic foreign body being read as not being present at a predetermined position of the optical image; and
verifying the calculated value by comparing the shape of the magnetic foreign body read in the optical image with the shape of a grouped area at the corresponding position at the shading map in response to the magnetic foreign body being read as being present at the predetermined position of the optical image.

10. The method of claim 1, wherein after separating the base material assembly (10) from the magnetic member S4, the method comprises cleaning the surface of the base material assembly (10).

11. The method of claim 1, wherein the investigation object sample has a weight of 50 g to 500 g.

12. The method of claim 1, wherein a magnetic foreign body comprises one or more of iron (Fe), nickel (Ni), cobalt (Co), manganese (Mn), chromium (Cr), zinc (Zn), titanium (Ti), and copper (Cu).

## Patentansprüche

1. Verfahren zum Analysieren magnetischer Fremdkörper, umfassend:
Erfassen einer Untersuchungsobjektprobe, die ein aktives Elektrodenmaterial auf einem ersten Haftgrundmaterial (100) umfasst, durch Mischen der Untersuchungsobjektprobe mit einem magnetischen Element, das das erste Haftgrundmaterial (100) aufweist, das auf einer Oberfläche S1 bereitgestellt ist,
Entfernen eines nichtmagnetischen Materials durch Reinigen einer Oberfläche des ersten Haftgrundmaterials (100), auf der die Untersuchungsobjektprobe erfasst wird S2,
Bilden einer Grundmaterialanordnung (10) durch Anbringen eines zweiten Haftgrundmaterials (200) an der Oberfläche des ersten Haftgrundmaterials (100), von der das nichtmagnetische Material entfernt wurde S3,
Trennen der Grundmaterialanordnung (10) von dem magnetischen Element S4; und
Durchführen einer Analyse an der getrennten Grundmaterialanordnung (10), um mindestens eines von einer Anzahl und einer Größe magnetischer Fremdkörper an der Grundmaterialanordnung (10) zu analysieren S5.

2. Verfahren nach Anspruch 1, wobei das erste Haftgrundmaterial (100) eine Lichtdurchlässigkeit von 30 % oder weniger in einem Bereich von 300 nm bis 800 nm in einer UV-Vis-Lichtdurchlässigkeitsanalyse aufweist.

3. Verfahren nach Anspruch 1, wobei das zweite Haftgrundmaterial (200) eine Lichtdurchlässigkeit von 70 % oder mehr in einem Bereich von 300 nm bis 800 nm in einer UV-Vis-Lichtdurchlässigkeitsanalyse aufweist.

4. Verfahren nach Anspruch 1, wobei das Analysieren der magnetischen Fremdkörper durch die folgenden Schritte durchgeführt wird:
Berechnen mindestens eines von der Anzahl und der Größe magnetischer Fremdkörper S5, die in der Grundmaterialanordnung (10) erfasst werden, durch Bestrahlen einer Oberfläche der getrennten Grundmaterialanordnung (10) mit Licht, um ein erzeugtes Sekundärlicht zu erhalten, Ableiten einer Schattierungskarte, die die Oberfläche der Grundmaterialanordnung (10) in Pixeleinheiten darstellt, aus dem erzeugten Sekundärlicht und Durchführen einerSchattierungsanalyse der abgeleiteten Schattierungskarte S5-1,
Lesen eines Vorhandenseins der magnetischen Fremdkörper in einem optischen Bild, das getrennt von der Oberfläche der Grundmaterialanordnung (10) erhalten wird S5-2; und
Verifizieren eines berechneten Werts aus der Schattierungsanalyse basierend auf dem Leseergebnis des optischen Bildes S5-3.

5. Verfahren nach Anspruch 4, wobei die Schattierungskarte eine Pixeleinheitsdarstellung von einem oder mehreren von Farbe, Chroma und Helligkeit in Abhängigkeit von einer Empfindlichkeit des erzeugten Sekundärlichts ist.

6. Verfahren nach Anspruch 4, wobei die Schattierungsanalyse das Gruppieren von Pixeln, die eine voreingestellte Bedingung der Schattierungskarte erfüllen, und das Quantifizieren eines gruppierten Bereichs umfasst.

7. Verfahren nach Anspruch 4, wobei die Schattierungskarte durch Röntgenfluoreszenz (XRF) erhalten wird.

8. Verfahren nach Anspruch 4, wobei das Lesen des optischen Bildes für Teilchen mit einer durchschnittlichen Größe von 10 µm oder mehr durchgeführt wird.

9. Verfahren nach Anspruch 4, wobei das Verifizieren des berechneten Werts aus der Schattierungsanalyse S5-3 durchgeführt wird durch:
Beurteilen des berechneten Werts an einer entsprechenden Position an der Schattierungskarte als Rauschen als Reaktion darauf, dass der gelesene magnetische Fremdkörper nicht an einer vorbestimmten Position des optischen Bildes vorhanden ist; und
Verifizieren des berechneten Werts durch Vergleichen der Form des in dem optischen Bild gelesenen magnetischen Fremdkörpers mit der Form eines gruppierten Bereichs an der entsprechenden Position an der Schattierungskarte als Reaktion darauf, dass der gelesene magnetische Fremdkörper an der vorbestimmten Position des optischen Bildes vorhanden ist.

10. Verfahren nach Anspruch 1, wobei nach dem Trennen der Grundmaterialanordnung (10) von dem magnetischen Element S4 das Verfahren das Reinigen der Oberfläche der Grundmaterialanordnung (10) umfasst.

11. Verfahren nach Anspruch 1, wobei die Untersuchungsobjektprobe ein Gewicht von 50 g bis 500 g aufweist.

12. Verfahren nach Anspruch 1, wobei ein magnetischer Fremdkörper eines oder mehrere von Eisen (Fe), Nickel (Ni), Kobalt (Co), Mangan (Mn), Chrom (Cr), Zink (Zn), Titan (Ti) und Kupfer (Cu) umfasst.

## Revendications

1. Procédé d'analyse de corps étrangers magnétiques comprenant :
la capture d'un échantillon d'un objet d'investigation comprenant un matériau d'électrode actif sur un premier matériau de base adhésif (100) par mélange de l'échantillon de l'objet d'investigation avec un organe magnétique sur une surface duquel le premier matériau de base adhésif (100) est fourni S1,
l'élimination d'un matériau non magnétique par nettoyage d'une surface du premier matériau de base adhésif (100) sur laquelle l'échantillon de l'objet d'investigation est capturé S2,
la formation d'un assemblage de matériaux de base (10) par jonction d'un second matériau de base adhésif (200) sur la surface du premier matériau de base adhésif (100) duquel le matériau non magnétique a été éliminé S3,
la séparation de l'assemblage de matériaux de base (10) de l'organe magnétique S4 ; et
la réalisation d'une analyse sur l'assemblage de matériaux de base séparé (10) pour examiner au moins un parmi le nombre et la taille des corps étrangers magnétiques dans l'assemblage de matériaux de base (10) S5.

2. Procédé de la revendication 1, où la transmittance de la lumière du premier matériau de base adhésif (100) est inférieure ou égale à 30 % à l'analyse de la transmittance de la lumière UV-Vis sur une plage qui va de 300 nm à 800 nm.

3. Procédé de la revendication 1, où la transmittance de la lumière du second matériau de base adhésif (200) est égale ou supérieure à 70 % à l'analyse de la transmittance de la lumière UV-Vis sur une plage qui va de 300 nm à 800 nm.

4. Procédé de la revendication 1, où l'analyse des corps étrangers magnétiques fait intervenir les étapes suivantes :
calcul d'au moins un parmi le nombre et la taille des corps étrangers magnétiques S5 capturés sur l'assemblage de matériaux de base (10) par irradiation d'une lumière sur une surface de l'assemblage de matériaux de base séparé (10) de manière à obtenir une lumière secondaire générée, production d'une carte d'ombrage représentant la surface de l'assemblage de matériaux de base (10) en unités pixels à partir de la lumière secondaire générée et réalisation d'une analyse de l'ombrage de la carte d'ombrage produite S5-1,
lecture d'une image optique obtenue séparément à partir de la surface de l'assemblage de matériaux de base (10) pour déterminer si des corps étrangers magnétiques sont présents S5-2 ; et
vérification d'une valeur calculée à partir de l'analyse de l'ombrage sur la base du résultat de la lecture de l'image optique S5-3.

5. Procédé de la revendication 4, où la carte d'ombrage est une représentation en unités pixel d'une ou de plusieurs parmi la couleur, la chromaticité et la luminosité en fonction de la sensibilité de la lumière secondaire générée.

6. Procédé de la revendication 4, où l'analyse de l'ombrage comprend le regroupement des pixels qui satisfont une condition prédéterminée sur la carte d'ombrage et la quantification d'une zone de regroupement.

7. Procédé de la revendication 4, où la carte d'ombrage est obtenue par fluorescence des rayons X (XRF).

8. Procédé de la revendication 4, où la lecture de l'image optique est effectuée pour des particules d'une taille moyenne égale ou supérieure à 10 µm.

9. Procédé de la revendication 4, où la vérification de la valeur calculée à partir de l'analyse de l'ombrage S5-3 fait intervenir les étapes qui consistent à :
estimer que la valeur calculée à une position correspondante sur la carte d'ombrage est un bruit en réponse au fait que le corps étranger magnétique n'est pas identifié comme étant présent à une position prédéterminée de l'image optique ; et
vérifier la valeur calculée en comparant la forme du corps étranger magnétique identifié sur l'image optique et la forme d'une zone de regroupement à la position correspondante sur la carte d'ombrage en réponse au fait que le corps étranger magnétique est identifié comme étant présent à la position prédéterminée de l'image optique.

10. Procédé de la revendication 1, où après séparation de l'assemblage de matériaux de base (10) de l'organe magnétique S4, le procédé comprend le nettoyage de la surface de l'assemblage de matériaux de base (10).

11. Procédé de la revendication 1, où le poids de l'échantillon de l'objet d'investigation va de 50 g à 500 g.

12. Procédé de la revendication 1, où le corps étranger magnétique comprend un ou plusieurs des suivants : fer (Fe), nickel (Ni), cobalt (Co), manganèse (Mn), chrome (Cr), zinc (Zn), titane (Ti) et cuivre (Cu).
